(19)

Europäisches Patentamt
European Patent Office
Office européen des brevets

(11) **EP 2 610 636 A1**

(12) **EUROPEAN PATENT APPLICATION**

(43) Date of publication:
03.07.2013 Bulletin 2013/27

(51) Int Cl.:
*G01S 13/72* (2006.01)    *G08G 3/00* (2006.01)

(21) Application number: 11196123.1

(22) Date of filing: 29.12.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Windward Ltd.**
20361 Tel-Aviv (IL)

(72) Inventors:
• **Daniel, Amiad**
53395 Givataim (IL)

• **Peled, Matan**
69982 Tel-Aviv (IL)
• **Raunstien, Ariel**
65221 Tel-Aviv (IL)

(74) Representative: **Virdee-Crofts, Kulwinder Kaur et al**
**Fresh IP**
**St. John's Innovation Centre**
**Cowley Road**
**Cambridge, CB4 0WS (GB)**

(54) **Providing near real-time maritime insight from satellite imagery and extrinsic data**

(57)    A method of providing a comprehensive near real-time maritime intelligence, within a predetermined area of interest, based at least partially on satellite imagery is provided herein. The method may include the following stages: applying operational analysis and a multi-sensor mission planning, to generate a coverage plan required for satellite coverage; receiving a plurality of acquired data from multiple sensors located on satellites and sensors located terrestrially, based on the coverage plan, wherein the acquired data is non-continuous over time; applying data verification, data extraction, data fusion and insight deduction on said received data, to produce near real-time data on specified maritime vessels, within said predetermined area of interest; producing a fused traffic analysis report comprising N fused, real world maritime images, such that the data verification, data extraction, data fusion and the insight deduction compensate for time gaps low image quality due to the non-continuous nature of the satellite imagery.

Figure 2A

**Description**

**Field of the invention**

The present invention relates generally to the field of maritime detection, tracking and monitoring of sea and ocean faring objects in a predetermined area of interest, and more particularly to doing so based on satellite data (imagery, radar, radio signals, etc.)

**Background of the invention**

The very nature of exclusive economic zones (EEZs) of a country often means that they spread over a vast amount of water - about 200 nautical miles (nm) from the shoreline. Nevertheless, all maritime sensors' ability to detect and track ships is limited to the range of the horizon - some 35 nautical miles from shore. The immediate implication is that the range between the end of the coastal detection range (35nm) and the end of the EEZ (200 nm) is left virtually unmonitored and unprotected.

At present the only available way to monitor these vast areas is by using maritime assets, i.e. maritime patrol aircraft and patrol vessels. The problem with using these assets is that the use of such assets does not result in an entirely effective and complete picture of the area of interest.

Using earth observation satellites for maritime is another possibility, however, the vast majority of these satellites are orbiting the earth at a low earth altitude orbit, and in practicality each one of them observe every point in earth for a few seconds once or twice a day. This very nature of earth observation satellite technology only enables them to take "snapshots" of what's been in the past, whilst the nature of sea and ocean faring vessels is that they are in constant motion and the scene therefore changes constantly. Other problems with current satellite technologies are: they are only able to produce low quality images which, by themselves, do not allow the creation of any real maritime insight; they contain multiple errors in size measurement, location and analysis of kinematic data; and their long latency greatly hinders the relevancy of satellite data for maritime applications.

The present invention aims to overcome or at least alleviate the problems of using satellite data for maritime applications in order to enable the extraction of maritime insight from satellite data.

**Summary of the invention**

Hereinafter, is provided an overview of the subject matter disclosed below, it should not be construed, however, as limiting the invention to any features described herein.

The embodiments of the invention are generally directed to the use of multiple types of data to produce near real time maritime intelligence.

The present invention therefore provides a method of monitoring predetermined areas to produce near real time maritime intelligence, said method comprising: receiving a plurality of acquired data from multiple sensors located on satellites and sensors located terrestrially; applying data verification, data extraction, data fusion and insight deduction on said received data to produce near real time data on all maritime vessels, within said predetermined area of interest; and producing a fused traffic analysis report which is comprised of N fused, real world maritime images.

**Brief Description of Figures**

Examples illustrative of embodiments of the invention are described below with reference to figures attached hereto. In the figures, identical structures, elements or parts that appear in more than one figure are generally labeled with the same number in all the figures in which they appear. Dimensions of components and features shown in the figures are generally chosen for convenience and clarity of presentation and are not necessarily shown to scale.

Figure 1 is a map-based diagram illustrating an exclusive economic zone of a country, compared to possible coverage of coastal radar;

Figure 2A is a high level block diagram illustrating the high level architecture of the system according to some embodiments of the present invention;

Figure 2B is a high level flowchart illustrating an aspect of the method according to some embodiments of the present invention;

Figure 3 is a high level block diagram illustrating an aspect according to some embodiments of the present invention;

Figure 4 is an exemplary processed SAR imagery illustrating an aspect an according to some embodiments of the present invention;

Figure 5A is a high level block diagram illustrating an exemplary architecture of some of the modules according to some embodiments of the present invention;

**Figure 5B** a high level block diagram illustrating another aspect of the present invention;

**Figure 6** is a diagram showing an "oblong" shape of a SAR image (with reference to a primary and secondary prediction) illustrating an aspect in accordance with some embodiments of the present invention;

**Figure 7** is a diagram showing the expansion of the viable future prediction area where different ships may be present, illustrating an aspect in accordance with some embodiments of the present invention;

**Figure 8** is a diagram showing the areas where it is probable and improbable for a ship to be, illustrating an aspect in accordance with some embodiments of the present invention;

**Figure 9A** is a diagram showing the "blips" (reflections of radar beams caused by ship bodies) of two ships illustrating an aspect in accordance with some embodiments of the present invention;

**Figure 9B** is a diagram relating to **Figure 9A** and showing an example of a good fusion in which both vessels are moving and a bad fusion where one vessel is almost stationary, illustrating an aspect in accordance with some embodiments of the present invention;

**Figure 10** is a diagram showing how a ship's direction may vary from what it reports, illustrating an aspect in accordance with some embodiments of the present invention; and

**Figure 11** is a diagram showing uncertainty areas illustrating an aspect in accordance with some embodiments of the present invention.

## Detailed Description of Figures

In the following description, various aspects of the invention will be described. For the purpose of explanation, specific configurations and details are set forth in order to provide a thorough understanding of the techniques. However, it will be apparent to any person skilled in the art that the techniques may be practiced without specific details being presented herein. Furthermore, well-known features might be omitted for simplification in order not to obscure the descriptive aspects of the techniques.

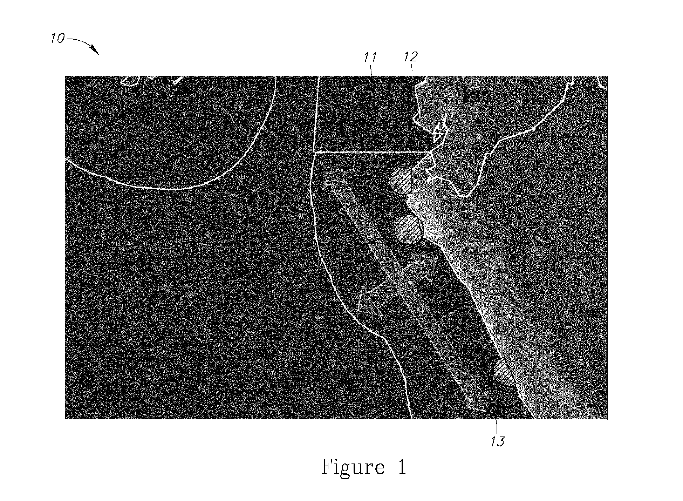

**Figure 1** shows the EEZ of a country in satellite imagery **10**. As can be appreciated, the area **11** that is covered by the EEZ is vast. Monitoring all of the maritime movement in a country's EEZ is a significant challenge. The only areas that can really be monitored using conventional terrestrial technology are bounded with the areas marked **12** and **13.** Therefore, it can be appreciated that the whole residual area **11** (apart from **12** and **13**) remains unmonitored. Since the coverage capacity of maritime sensors is limited and is far below the size of the EEZ, and the use of current alternative means (e.g. patrol vessels, maritime patrol aircraft) it is imperative to correctly identify the critical areas where illegal maritime activities may be taking place. The invention may apply to different types of areas, terrestrial or naval, but in the preferred embodiment, the invention is applied to a coastal area or an EEZ. In any event, the area of interest is a predetermined area.

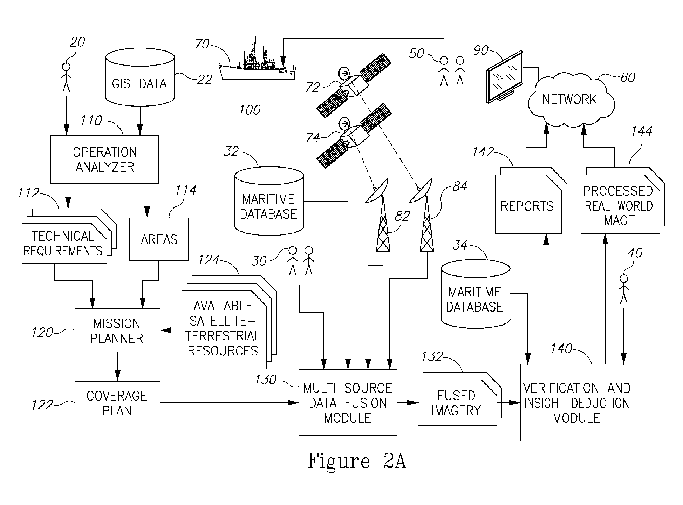

**Figure 2A** is a high level block diagram illustrating the high level architecture of a system **100** according to some embodiments of the present invention. System **100** may include an operation analyzer **110** which is inputted with mission requirements and geographic data relevant to the nature of maritime monitoring mission. The data may be possibly provided from a GIS database **22** or from human experts **20** or alternatively from the clients **50**. Operation analyzer **110** which may be implemented on a server may be configured to process the geographic data and the mission requirements and generate, in turn, technical requirements **112** and region of interests or areas **114** being well defined surfaces that need to be covered by satellites imagery. The one or more technical requirements are indicative of the minimal refresh rate (update rate\revisit time) of the satellite imagery, the minimal resolution and other metrics that are required as prerequisites for carrying out the maritime monitoring mission based on the satellite imagery. Technical requirements **112** are then fed together with areas **114** and with a list of available satellite and terrestrial resources **124,** to a coverage planner **120** which may be also implemented on the aforementioned server. Mission planner **120** then generates a coverage plan **122** which is a tempo-spatial model which maps concrete terrestrial and satellite resources and periods of time for which the satellite imagery is required.

A multi source data fusion module **130** then receives, based on coverage plan **122,** raw satellite imagery of various types via earth-located stations **82, 84** which receive the raw satellite imagery data from various satellites **72, 74.** It should be understood that the satellites **72, 74** may include either SAR satellites, optical satellites or any type of satellite that is technically able to generate an imagery of the surface of the earth, receive voluntary transmissions as well as any combination thereof. In multi source data fusion module **130** raw satellite imagery may be fused into fused imagery **132** data by combining and validating the received satellite imagery data, possibly by applying some decision function based on maritime data from a maritime database **32** and/or human experts **30** who may validate and apply relevance of certain satellite imagery data. In some embodiments, maritime database **32** may be either a public or a private database. The database includes historical data that accumulates data on global ship behavior over time. Thus, whenever an anomalous vessel performs a felony behavior three months before the actual monitoring, the historical data reside on maritime database **32** and may be available for monitoring.

In a verification and insight deduction module **140,** also implemented on the server side, the fused imagery **132** data may be validated on the maritime vessel level, possibly based on by a maritime vessel database **34** (either similar to database **32** or a different one storing different type of data) and further human experts **40.** The output of verification and insight deduction module **140** may be either in a form of a processed real time world image **144** or by reports **142** that can be presented to clients **50** via a secured network **60** over a display **90.** Processed real world image **144** includes additional data that is relevant to the maritime vessels whose activity has been monitored in accordance with the mission description.

Advantageously, processed real time world image **144,** as well as textual reports **142** that are delivered over network **60** may be then used by clients **50** and third parties to point assets **70** in order to carry out real-world interception of anomalous targets based on the data extracted from the processed real world image and the reports.

Described herein below are further examples for implementing the aforementioned architecture and logic of system **100.** It is understood that various implementations may be possible and the following description should not be regarded as limiting. The titles of the following descriptions are associated with the reference numerals of the elements shown in **Figure 2A.**

**Operational Analysis (possibly implemented by operation analyzer 110)**

A methodology for operational analysis which may be used in conjunction with the present invention may include the following:

1. Analysis of the country's fisheries, which may include, by way of example only:

    a. Artisanal vs. deep sea fisheries;
    b. Fishery grounds and ports;
    c. Fishery methods
    d. Seasonal effects on abundance of fishing grounds;
    e. Magnitude of illegal fisheries;
    f. Presumed illegal violations of fishery laws;
    g. Fishery regulation-marine protected areas, closed season etc.;

2. Analysis of local merchant movement, including:

    a. Major ports and waiting area; and
    b. Merchant lanes

3. Analysis of strategic facilities:

    a. Location and character of offshore facilities;
    b. Location and character of seaside facilities; and
    c. Gas or oil excavation areas

4. The current enforcement model includes:

    a. Analysis of current enforcement entities (coast guard, Navy etc);
    b. Major enforcement bases;
    c. Magnitude of over the horizon maritime surveillance and relevant assets;
    d. Possible enforcement "weak-spots"; and
    e. Current coastal detection array

5. Relevant threat - the main maritime interest/phenomena of the client may include:

    a. Suspected ship routes/area;
    b. Typical ship profile - size, speed, behavior;
    c. Modus operandi; and
    d. Motives - economic, security, etc.

The result of this process of operational analysis is a breakdown of the crucial monitoring areas in a country and a clear understanding of the technical requirements, i.e. required data update level, satellite resolution, required latency and operational plan.

**Mission Planning (possibly implemented by mission planner 120)**

The operational analysis phase is followed by a detailed satellite data plan. The satellites may comprise: earth observation satellites such as: synthetic aperture radar (SAR); automatic identification system (AIS) and optical. Data from vessel monitoring system transponders (VMS), reflective satellites, terrestrial AIS and meteorological sensors may also be used. Using knowledge of the different satellite sensors (orbit, age, capabilities, revisit time etc.) a detailed multi-source mission plan may be constructed: tasking multiple satellites, from multiple providers and multiple (including third party) ground stations.

As opposed to land based applications, the present invention is a method of using satellites for maritime applications. By using relatively low resolutions, it is possible to expand the scanned area and provide superior coverage. Furthermore, in order to increase detection chances, the present invention comprises a satellite monitoring plan using multiple scanning modes, resolutions and angles.

Moreover, in order to increase scanned areas, the present invention also tasks contiguous scans (two or more consecutive scans on the satellite orbit). This enables better coverage of large EEZs and deeper data available for behavior analysis algorithms.

As opposed to land based applications, maritime monitoring requires frequent updates of data. Most of current earth observation satellites are low earth orbit (LEO), and launched in polar or near equatorial orbits. This means that the same area of interest (AOI) has different satellite coverage and passages every day. Moreover, LEO satellite coverage changes as a function of the position on the earth (e.g. polar satellites will have more passages closer to the poles).

Since the present invention focuses on satellite based maritime intelligence, the issue of satellite availability is crucial. As part of the operational analysis, the present invention involves analyzing the availability of different satellite sensors and constructing the daily monitoring plan.

In order to provide the full satellite based solution, the present invention may use all available satellites over a given area. These multiple satellites provide better, wider, and deeper maritime data. This, in turn, improves data fusion and behavior analysis ability (transforming a satellite static acquisition into a dynamic picture).

In many cases tasked acquisitions will concentrate on a specific time window in order to gather focused, better data on ships behavior and be able to implement SAR to SAR correlations and optical imagery identification of vessels.

The aim of the present invention is to provide near real time maritime insight on vessels, therefore data latency must be kept to a minimum. In this context, data latency is defined as the time that passes between data acquisition and delivery to the client. It comprises the following factors:

1. Time from data acquisition until the satellite downloads the data to a ground station;
2. Processing time in the ground station (from bytes to "final image");
3. Time between end of processing until delivery for use in the present invention; and
4. Processing time by the present invention.

Data latency may be reduced by using three major measures:

1. Business contracts: A business definition in the respective service level agreement that ensures high priority for processing maritime images.
2. Using third party ground stations: In order to hasten stage 1 (above), the present invention uses additional third party ground stations (which are not the satellite operator's).
3. Automatic data processing: in order to minimize processing time the present invention makes use of automatic image processing, data fusion, path prediction and behavior analysis algorithms.

Therefore, the present invention makes use of HH polarizations in order to increase the chances of ship detection and uses HV\VV polarization in order to increase the chances of wake detection. In some cases, depending on satellite abilities, the present invention makes use of dual pole or quad pole satellites (i.e. satellites which are able to take both HH and HV images of the same exact area, during the same exact orbit). In turn, this allows better automatic processing and higher detection abilities.

In addition, the planning process may include pre-planning of available optical satellites. As these pass in different hours in the day than SAR satellites, the system will task them to an area in which unidentified ships were detected. In some embodiments of the present invention, an optical image may be acquired after the SAR-based prediction. The optical image then provides verification of the SAR prediction. This preplanning enables optical identification of path-predicted unidentified vessels.

**Data Processing module** (possibly implemented by multi source data fusion module **130** and verification and insight deduction module **140)**

The core of the present invention is the data processing module. The module is comprised of two main parts:

1. Processing methodology; and
2. Data processing algorithms.

The main objective of the present invention's data processing module is transforming fragmented and partial maritime data from multiple sources and voluntary transitions, into one real world current picture. The system aspires to maximum quality (i.e. compatibility between the "fused" picture and the "reality") and minimum processing time.

The end client may receive the data via a web based, interactive, Geographic Information System (GIS) platform, which reflects the real world picture as processed by the present invention or as an Application Programming Interface (API) into C4I systems (Command, Control, Communications, Computers, and Intelligence). Alternatively, some clients may receive an in-depth, report like written analysis.

The data processing methodology comprises the following stages, allowing this system to offer end to end satellite based maritime intelligence services.

**Multi Sensor Data Fusion**

The system of the present invention receives data from multiple sensors types, and uses several sensors of each kind. The present invention provides fusion between maritime data from satellite sensors using working methodology and algorithms.

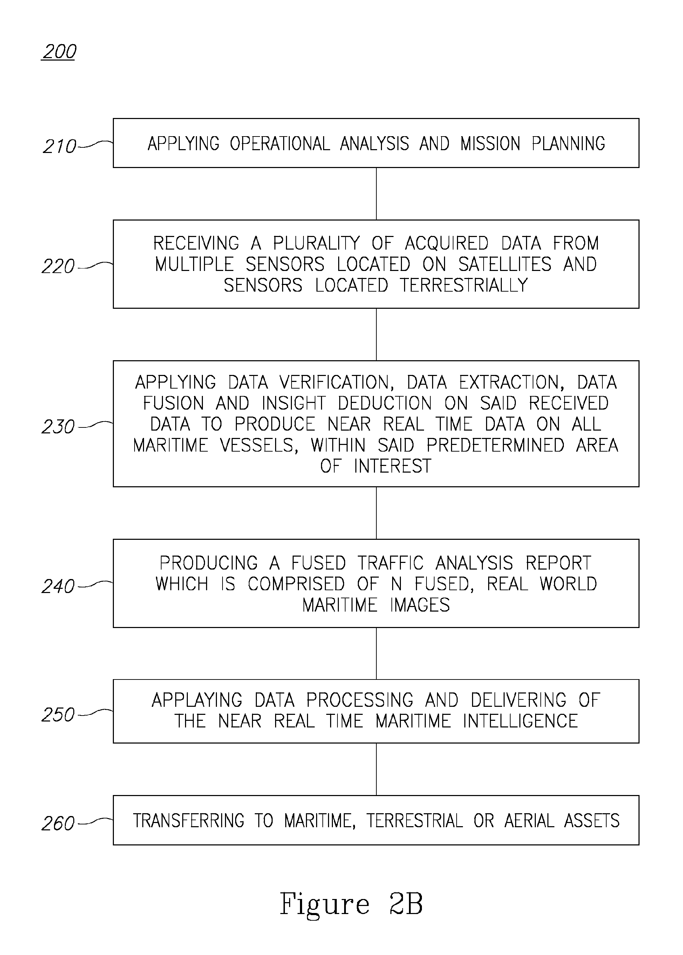

**Figure 2B** is a high level flowchart showing another exemplary alternative method according to some embodiment of the present invention. For the sake of simplicity and clarity, **Figure 2B** depicts the basic steps of the method and logic of the present invention. Method **200** starts off by carrying out operational analysis and mission planning **210** This stage is followed by the stage of receiving a plurality of acquired data from multiple sensors located on satellites and sensors located terrestrially **220.** The method goes on to the stage of applying data verification, data extraction, data fusion and insight deduction on said received data to produce near real time data on all maritime vessels, within said predetermined area of interest **230** and then finally to the stage of producing a fused traffic analysis report which is comprised of N fused, real world maritime images **240.** This is followed by applying data processing and delivery of said near real time maritime intelligence **250** and transferring of this data to maritime, terrestrial or aerial assets in order to allow interception **260.** Then, in an optional stage, the method may proceed to transferring the real time intelligence to maritime, terrestrial, or aerial assets **260.** It is understood that the aforementioned high level logic may be implemented in any architecture notwithstanding the architecture depicted below, by way of example only.

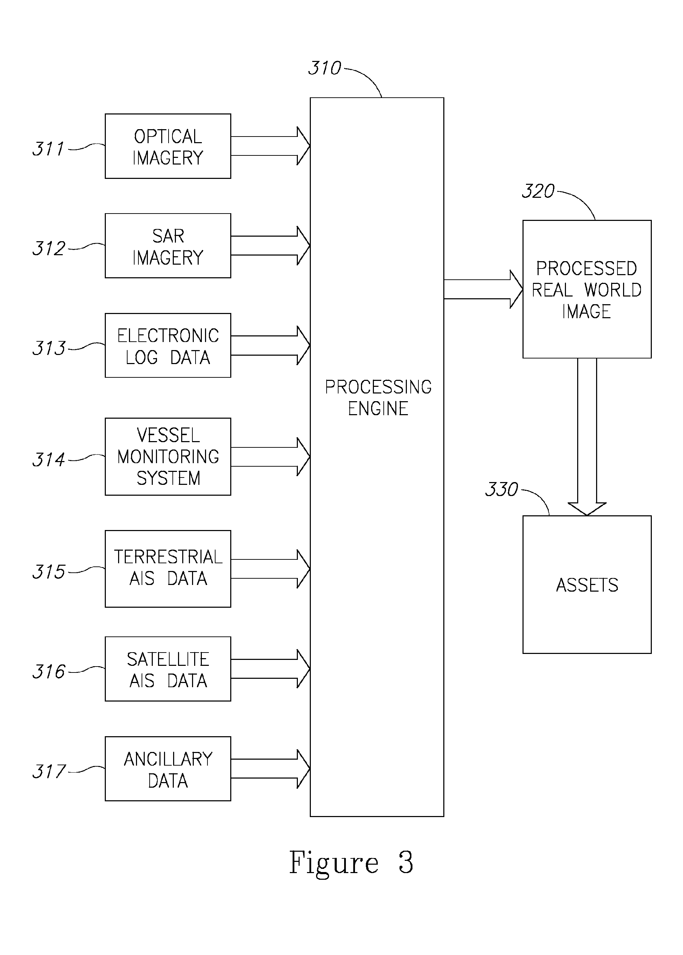

**Figure 3** is a high level diagram illustrating an exemplary system data flow according to an embodiment of the present invention. As can been seen, data from multiple sources is received into the processing engine **310.**

Once the data is received onto the system, the following methodology of handling the data is used. The methodology is comprised of five main phases:

1. Data verification
2. Additional data extraction
3. Fusion
4. Ship verification
5. Insight deduction

Following is a detailed explanation of possible implementations of the aforementioned functionalities. It should be understood that the description below should be regarded by way of illustration only and not by way of limiting the scope of the present invention.

**Phase 1: Data Verification**

As described in **Figure 3,** the system receives data from multiple sources. This processing module may be a part of the aforementioned data fusion module **130.** Processing engine may be fed by optical imagery **311,** SAR imagery **312,** electronic log data **313,** vessel monitoring system **314,** terrestrial AIS data **315,** satellite AIS data **316, ,** ancillary data **317,** and the like. As explained above, the output of processing engine **310** may be in the form of processed real world image **320** where additional data are used either for validating or for deducing further information. The additional data may be either superimposed on the processed real world image **320** or it may be referred to in reports sent to clients. Clients may send the aforementioned processed real world image, together with the system future path and position predictions to maritime and/or aerial assets **330** in order to intercept anomalous vessels at sea. It is noted that prior to the fusion, none of the received data is treated "as is", and every bit of it is cross checked using both automatic algorithms and expert operators.

**Active Transmissions - Automatic Data Verification Process**

Once data is injected into the system, automatic algorithms examine its compatibility with known data bases in the public domain and with private data bases. Since maritime data is constantly gathered throughout the world, and through time - the present invention is able to cross reference and verify data on a global scale.

**Automatic Data verification process is performed for all active transmissions - e.g. AIS, VMS, Long Range identification and tracking (LRIT).**

A Maritime Mobile Service Identity (MMSI) is a series of nine digits which are sent in digital form over a radio frequency channel in order to uniquely identify ship stations, ship earth stations, coast stations, coast earth stations, and group calls. These identities are formed in such a way that the identity or part thereof can be used by telephone and telex subscribers connected to the general telecommunications network to call ships automatically. When ships transmit AIS data, a unique ID is transmitted. This unique ID is automatically cross referenced with a global public domain databases in order to verify several parameters. The parameters below are provided as examples only, as automatic data verification processes are constantly evolving and include many more tests:

1. **Detect inconsistencies** - between registered ship ID and "legal" details and de-facto transmitted details. For instance: incompatibility between actual ship type (e.g. fishing vessel) and registered (e.g. container vessel).
2. **False reports** - the system detects and flags false MMSIs (e.g. 12345678).
3. **Geographically Illogical reports** - The system automatically correlates between positions of reported ships in order to verify geographical inconsistencies. For example - if the system detected a ship transmitting a specific MMSI across the US, and a day later it detected a ship transmitting the same MMSI across Italy - it will raise a flag.
4. **Double reports** - Double reports of same ship MMSI at the same time from two different targets.

**Phase 2: Additional Data Extraction**

As opposed to automatic data verification that is performed using public and private data bases, the present invention performs a different process in order to verify the images of SAR and optical imagery data and extract additional data.

The combination of extensive and profound maritime know how and intimate knowing of SAR and optical satellites allow the inventors of the present invention to extract additional data from standard images over sea. This additional extraction significantly improves usability and effectiveness of SAR images as a major sensor in maritime intelligence.

The inventors have also developed a **SAR Mode** processing module: a processing module that enables the operator to review the full SAR images quickly and effectively.

The basic concept of the SAR mode or SAR processing module is that SAR satellite data cannot be treated as "automatically correct". Hence, every ship must be examined deeply by a respective algorithm and an expert operator in order to optimize the ship detection process.

The second basic and crucial concept of the SAR processing module relies on the fact that vessels at sea are in constant movement, while satellites always report the reality that was true some time ago. Since the present invention aims to provide near real time, online and actionable maritime intelligence, the whole data process and specifically the SAR Processing Module both have to provide maximum effectiveness in minimum processing time. The maximum effective data latency (from acquisition to delivery to the client) is derived from an operations research.

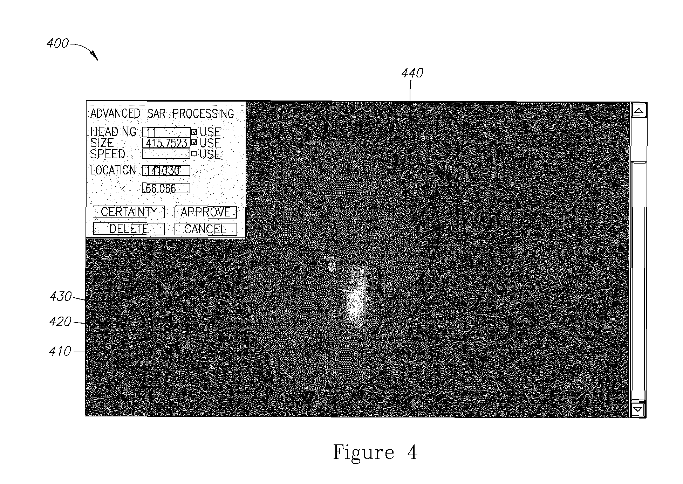

**Figure 4** illustrates a computer aided user interface configured for analysis of ship silhouette, size and direction **400** that has been processed by SAR processing module in cooperation with a human operator. The user is presented with a predicted location **430** (based on other sources) and a specified radius **410** of the vessel, as well as a movable visual indicator **440** (shown in a non-limiting triangular form here). The human operator may move the visual indicator **440** to overlap the actual silhouette on the SAR imagery **400.** By doing so, the human operator, in a transparent and seamless manner provides location, and possibly: heading, size and speed of the vessel based only on the silhouette characteristics. In the example shown, only heading and size may be retrieved (on top of the location) and a user interface supporting this feature is further shown.

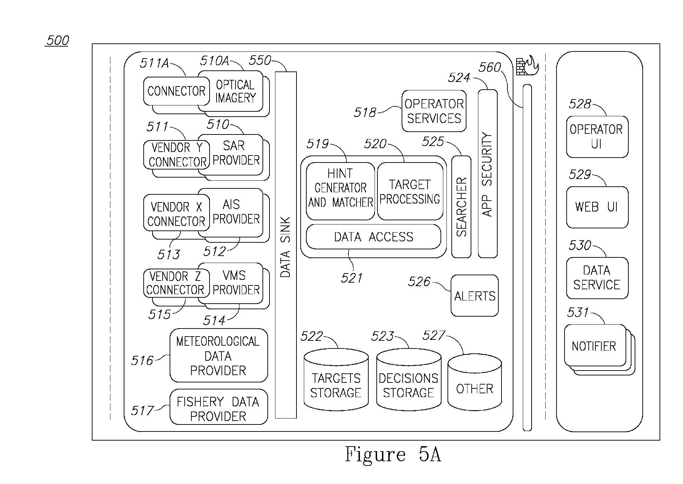

**Figure 5A** shows the basic architecture of a specific embodiment of the present invention. Herein below is a description of a possible system. The data flow of multiple sources are represented by SAR provider **510**, AIS provider **512**, VMS provider **514**, optical imagery **510A** and their respective connectors **511, 513,** and **515, 510A.** Also shown in the sources side are meteorological data provider **516** and fishery data provider **517.** On the processing side (also being server side) connected to the source side via data sink **550,** there are provided hint generator and matcher **519,** target processing module **520** and data access module **521.** Other modules on the processing side are operator services module **518,** searcher **525,** App security **524,** Alerts module **526,** targets storage **522,** decisions storage **523,** and other storage **527.** On the client side, and beyond a firewalled network **560** there are provided operator user interface (UI) **528,** a web user interface (UI) **529,** data service **530,** and a notifier **531.** It is understood that the aforementioned architecture is provided herein by way of example only.

Following is a further elaboration on some of the elements depicted in **Figure 5A** with respective reference numeral in parentheses:

### Connectors (such as: 511, 511A, 513, and 515)

Connectors are separate processes that connect to their configured end-point, using the configured credentials, fetch the raw data, write the raw data to files (images) or parse it into facts and save them to the incoming facts table on a local Data Base (DB). That table holds facts until they are handled and marked as such.

### Data Sink (550)

The processing starting point is entry point to work which creates a stream of fact events to feed the hint generator. A record read from DB is marked as "in processing" to allow the reader to not read it again; when the process loads it resets all "in processing" status to unprocessed (to recover from crashes); the events stream could perform dispatch batches of facts (batching can be based on number of facts or arrival time window), which is followed by a flush operation, that will save the processed data, and mark the relevant facts as processed.

### Hint Generator (519)

The hint generator will load all Fact2Hint factories (assigning the relation between a hint and the originating fact). Those factories will also return some predicate to load possible targets (range, size, etc). A single fact can definitely generate several hints.

While several hints may be contradicting each other - the hints themselves should not be aware of that, and only let the target processing deal with it.

### Target Loader

The targets loader will accumulate enough target predicates, and load all relevant targets and their hint history.

### Hint Matcher (519)

Every blip (suspected target hint) is initially always converted to a target, so that if a blip hint is assigned but was deduced as irrelevant to a target - processing of a different target (the one created ad-hoc) will be possible.

The main point of the hint matcher is to reduce the number of hints for the target processing phase later; if every hint is assigned to every target - target processing will become polynomially long operation.

### Target processing module (520)

The Target Processor is the pre-frontal cortex of the system - it decides how the world looks like.

A target is only a set of data (lots or little, correct or incorrect, duplicate, or irrelevant, probable or farfetched), but what is required is to produce is a real-world description, high probability predictions, threat assessed Target. This is the decision object, and it may have multiple predictions, if all fit.

Since every blip has an ad-hoc target created for it - a lot (the majority) of target processes results should be target merges.

Some hints (blips) can only be definitely assigned to one target, so if two targets have the same two blip hints - the decisions for the targets should be one-to-one matches. The hints will therefore be aware of their exclusivity, and which targets have them assigned and which is actually using them.

Hint (arrival) order has no meaning, since target processing reviews a complete target and hints history, and attempts to make the best decision based only on raw data; previous decisions made with less data (regardless of temporal location) should not hinder current processing. This is especially important in a world where there is no necessary correlation between the time that a data was acquired and the time when it was delivered (e.g. an acquisition taken at 0600 may be delivered before an acquisition taken at 0500).

**Data Access (521)**

After a complete (facts-hints-targets) processing operation all data need to be persisted in the relevant storage.
After saving the decisions (no transaction needed; decision can have a more "advanced" state than data, and in case of server crash - recalculating the same decisions and overriding them in the DB is no harm) updating the facts, hints and targets should be persisted together in a transaction, to avoid inconsistent state in case of server crashes.

**Operator Services (518)**

Operator updates to the data are done via specialized fetch services, but using the exact same hints mechanism that normal processing uses, only with "stronger" hints, that should be allowed to take precedence over normal hints in target processing.

**Alerts (Notifications Manager) (526)**

The system is required to offer some subscription, push-based data delivery mode, to unknown endpoints (email, SMS, firing flares, etc.), based on unknown criteria; therefore the system will have a notifications manager module that, using any relevant notifiers, pushes data to those clients. The notification manager is not aware of the notifiers (can only invoke them).

**Notifiers (531)**

The system may be required to notify clients to unexpected endpoints; therefore a plugin model for the notifiers will allow for expansion of the system to include such notification routes.
The following are the data entities used in accordance with the aforementioned architecture:

**Data Entities**

**Unmodeled Raw Data (or Data Items)**

The system needs to handle incoming data, in its raw form. Some data can be used to deduce facts and hints (e.g. AIS report of 10 blips, see explanation of blip below), and some cannot (e.g. raw image from SAR). Un-processable raw data will be stored as-is, regardless of future processing prospects.

**Facts**

The system needs to handle varying amounts of incoming data, from different sources and of different types; therefore the system will abstract those data items as "Facts". Examples:

A SAR report of 40 "blips" is not one fact; each blip is a fact.
Weather report that the sea is high in a given area is one fact.
A blip with location, direction, size and speed is one fact.
Facts derived from raw data should not entail any logics or processing. If raw data conversion to facts required logic - it may mean that that fact is really a hint.
Static data (like sea currents and shipping routes) is not fed to the system as facts, rather it is something that the processing rules will take into account (it's "hardcoded").

**Blips**

A report about a possible location of a target (SAR target, AIS report, VMS position report etc.) will be called a blip, and has at least three data items: source (sensor), time of blip and location of blip. Other information, based on source, may be in the blip properties.

**Ships**

The system needs to provide helpful, meaningful data to the customer, not raw materials; therefore the system will create "Ship" entities to be used by the end customer.

SAR processing module actually enables the operator to "jump" between all ships detected by the SAR satellite and examine the following parameters:

1. Existence: is the detected reflections\object REALLY a ship or is it a false positive report?
2. Position: Is the ship position accurate or does it needs to be corrected?
3. Size: What is the actual size of the detected ship?
4. Kinematic data: Detection and correction of ship sailing direction and velocity. If wake isn't available, an operator analyzes ship direction.
5. Classification: What kind of ship is it (e.g. tanker vs. container ship).
6. Silhouette: does its silhouette correlate with another known ship?

The above tests and additional extractions are adapted per reporting sensor, and acquisition mode. Thus, different algorithms set and processing method will be applied for analyzing images from different SAR sensors, at different acquisition modes.

### Targets

The system needs to provide a complete view of a given theatre, and not simply "snapshot analysis"; therefore the core entities of the system are the "Targets", and not snapshots (e.g. a chunk of SAR targets from a single acquisition).

### Phase 3: Data Fusion

The core competency of the present invention is to extract maritime insight out of satellite data. The major challenge lies in the fact that every satellite sensor may acquire data over a slightly different area at different times. In addition, each image is acquired using different sensors, in different acquisition modes, and processed by different satellite providers. Latency may also vary as a result of different satellite orbits and the positions of different ground stations available for data downlink.

Unsuccessful data fusion might result in wrong or inaccurate maritime image, which might lead to wrong decisions. Current technologies lack the ability to perform effective SAR to SAR correlation. This might mean that when acquiring data using two satellites over a given area, one might come to the conclusion that two ship reflections, from two different satellites and at different times - are actually two ships in the sea, rather than one.

Therefore, in order to deduce maritime insight, one must first fuse data correctly. This may be carried out by the use of the following algorithms.

### Automatic Algorithms

The present system uses three core algorithms in order to automatically fuse satellite based maritime data:

• Data Fusion

• Path Prediction

• Risk Analysis

As opposed to other "general purpose" vessel monitoring system - the goal of the present invention of "catching bad guys" makes the task more complicated, as the system is required to handle the less predictable entities in the sea.

However, by taking the lowest-resolution images (thereby covering the most area) and eliminating the "well behaving" AIS-centric ships, several problems still exist. These are detailed below.

### SAR Image processing

Extensive research is done in automatic ship extraction from SAR images, however, due to the low resolution of images that are often acquired (up to 75m per pixel resolution), concrete direction or silhouette extraction is not something that can be counted on.

When the image resolution is higher (30m per pixel or better) then more details can be extracted from the image, either automatically or with the help of a human operator:

**Size**

Most of the time a size estimate (even a rough one) is available, due to the nature of the sensor (SAR, acquiring from above, unlike normal coastal/ship RADAR system), and that allows the system to boost fusion performance (and probability) by eliminating "size misfits", and providing a better "top speed" assessment for the blip, so that fewer blips may be matched (incorrectly). For example - two SAR blips, taken 40 minutes apart and with a distance of 20NM from each other define a speed of 30Knots; however, if the blip sizes are 250m - that's not a valid match, because that's not a possible speed for a 250m vessel. It is valid, however for a 50m boat, so as the size factor is available - the "worst case scenario" should always be considered, and that would have been a valid match.

**Silhouettes (both optical and SAR based)**

In some cases the present invention enables the use of optical satellites for maritime applications in combination with SAR based imagery. While these satellites (which are in essence large "cameras" orbiting the earth) are used for monitoring port and coastal areas, they are rarely used for open sea maritime monitoring.
By themselves, they do not provide enough coverage area in order to enable exclusive economic zone monitoring (for instance at best they are able to monitor "squares" of 40*40 km at a 70cm resolution).
Nevertheless, when combined in the framework of the present invention, optical satellites may provide an added value: As SAR satellites only provide a very blurry silhouette, the present invention uses the clearer silhouette derived from optical satellites in order to provide a definitive identification of ships (type, class, shape, occupation). Since names on the freeboard of ships are not visible due to the angel of the imagery and the low resolutions (again, to cover large sea areas).

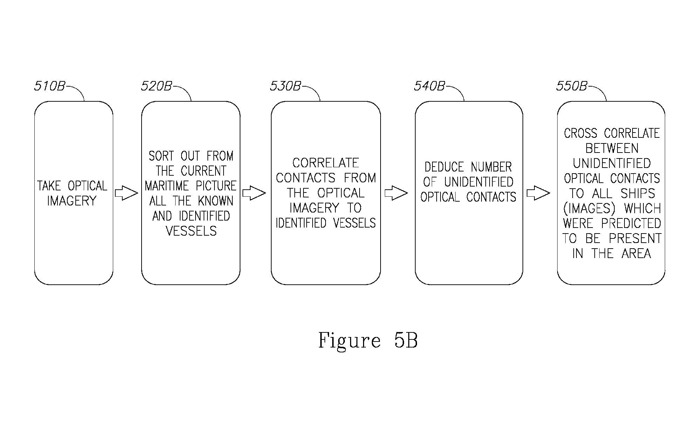

**Figure 5B** depicts a high level data flow implementing this concept according to which optical imagery is taken **510B;** all known and identified vessels are sorted out **520B;** contacts from the optical imagery are correlated to identified vessels **530;** number of unidentified optical contacts are deduced **540B;** and applying a cross correlation between unidentified optical contacts to all ships which were predicted to be present in the area **550B.** More specifically, the system performs two different correlations with optical satellites:

1. **Correlation between SAR and optical silhouettes**: In order to provide better matching, the system performs automatic (human monitored) correlation between the silhouettes as detected by both SAR and Optical sensors.
2. **Identification according to ship silhouette**: The current system uses image processing algorithms in order to cross correlate between the clearer ship silhouette (derived from the optical image) and public/private databases (which include images of the ships themselves). This way, the system provides identification to passive contacts that were previously unidentifiable.

Several technological challenges are involved in this module of the system:

- Satellites take images from above, whilst public data bases are comprised of images taken from the dock (same height as the ship).
- Five container vessels might look exactly the same from above, and will defer slightly only by name.
- The number of ships travelling is very large, hence making cross correlation very challenging.

**Determining the direction of the vessel**

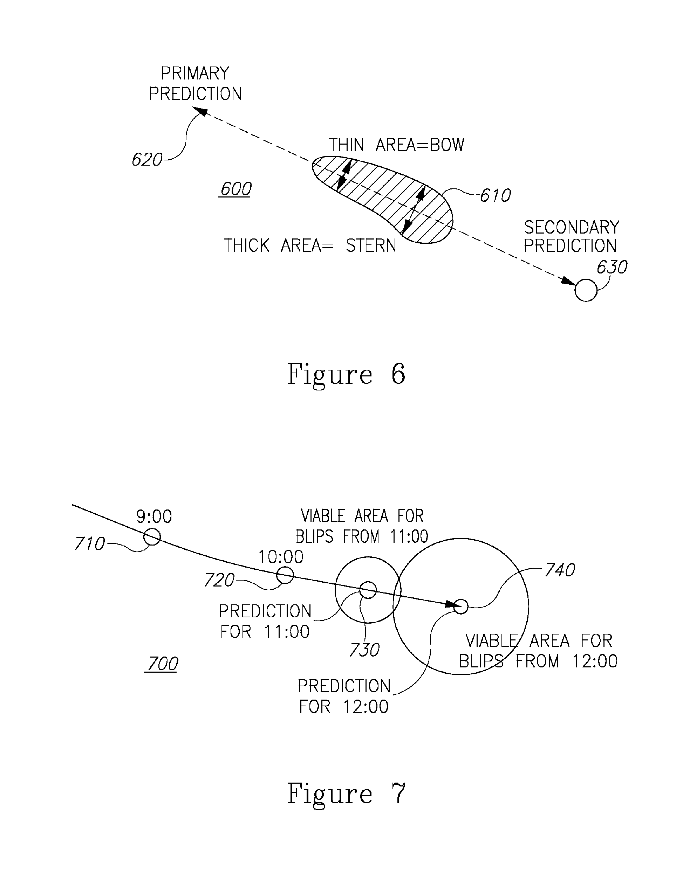

**Figure 6** shows the "oblong" of a SAR image **600.** More often than not (at the appropriate resolutions) it is possible to extract a direction estimate of the blip **610,** because blips are not perfectly round (or symmetrical). Simply by stating the sailing direction as the "direction of the oblong" being a primary prediction **620** it is possible to easily obtain a rough estimate (close within 30 degrees), with a possible error of 180 degrees ("sailing forwards or backwards"). This allows the present system to move from a symmetrical expansion model to a directed one.
Nevertheless, a secondary prediction **630** is necessary in order to allow further possible consistency. It should be noted that in some types of ships the thick area is not necessarily indicative of the stem of the ship and so the second prediction is required in any probabilistic model. Thus, the use of both primary prediction **620** and secondary prediction **630** caters for both possibilities.
Furthermore, after obtaining the course from the oblong, it is possible to extract the actual concrete direction by locating the ships stem. As a rule of thumb - the ships bridge is at the stern, and due to its size (and height) the acquisition may show a "broader" area, and it can be determined that as the bridge, and thereby determining sailing direction. Expert analysts are able to determinate whether a specific ship may have its bridge at the bow, thus minimizing possible incorrect assesments.

Naturally, there are exceptions to that rule, and in case there's complementary data (after the fusion stage) like the type of the ship, or previous, clearer acquisitions, the direction of the blip may be changed.

**Speed**

Speed, as a second factor in the Kinematic information of a blip can usually be derived from wake analysis. What is done is finding the wake (waves that the ship creates in the water due to its travel) and calculating its size. But two ships, one traveling at 10Kn and one at 25Kn can both create the same wake (e.g. a 600yd, 35degrees triangle behind the ship), and determining the speed requires the ship size, width, tonnage, engine/rotor make and type, ship breadth, depth, and draft, alongside weather conditions (high sea, strong winds) and SAR acquisition parameters (polarization, angle wavelength and resolution). In addition, ship wake is affected by the sea state, to a level where the same ship, sailing at the same speed may leave two different wakes on two different days.

**Silhouette from SAR Sensors**

While not unique, a ships silhouette can be distinctive amongst other ships, and is therefore a tool both for blip fusion and for later ship identification. It also provides a strong evidence for later incrimination of a ship of wrongdoings.
Extraction of the silhouette is done both for operator presentation and for other automatic algorithms, as the ship's class can be derived from the silhouette, and a more concrete behavior model can be constructed.
Silhouette can be further "normalized" from the skewed image taken from the satellite (which always acquires images at 30 to 60 degrees angle). Matching two blips of the same ship, taken from two different angles can be done only after normalizing the acquisition angle. Incoming data (blips) arrives to the system when all the historical data is still there, already fused, path-predicted and risk-analyzed. New blips are added to existing ships (or are defaulted to create new ships by themselves). The "Hint Generator & Matcher" will fetch existing ship candidates, match new hints and after fusion has completed - pass the baton to the "Target Processing" module to run path prediction and risk analysis.
In order to further reduce the uncertainty detailed above, the present invention aims to reduce the complexity of the challenge as follows:

**Fusion process:**

**Data Fusion**

The Data Fusion is differentiated by three main "styles":

    1. Active-Active matching
    2. Passive-Passive matching
    3. Active-Passive/Passive-Active matching

By "Active" it is hereby referred to as voluntary transmissions/reports, e.g. AIS or VMS; "Passive" reports are from non-cooperative sensors (i.e. ones that do not require vessel cooperation), such as SAR satellites.

**Active-Active Matching**

For the most part, Active-Active matching is done using an identifier sent by the ship itself. Most existing systems make use of this ID blindly, and some make some risk analysis after a fusion is made. The present system, however, relies on the identification, but not blindly; after a report arrives with a certain ID - the match to an existing ship with that ID is done only after checking several rules about the applicability of the match. Amongst these are: checking that a vessel has not changed some of its basic identification parameters (e.g. ship class, size, name and port of call); geographic impossibility to travel between the new reported location to any existing reported locations; two blips with the same identifier are reported at the same time with different locations (over 1NM margin of error).
Active-Active matching is done at a high priority to "clear the noise" for the more difficult match types. If no ID-based match can be made - the blip is considered a passive one, and the following algorithms are invoked.
It should be noted that "Active-Active" fusion may not be as trivial as matching blips from the same sensor - two blips from the same sensor naturally have the same identifier. AIS to VMS data is also matched, which sometimes requires 3rd party databases, and sometimes that correlation DB does not exist, and therefore Passive-Passive fusion is reverted to.

**Passive-Passive Matching**

When referring the Passive-Passive matching we refer to matching a single blip from a passive source to a different passive blip from either the same or a different sensor, within a short time span (no more than 2 hours).

In a possible embodiment of the system, during the planning phases of an operation, coverage of two or more subsequent SAR acquisitions for the same area, are created, thereby allowing the Passive-Passive matching to take place.

There are, however, several issues with dealing with Passive-Passive matching as follows:

**Unidentifiable**

AIS reports are identified by an MMSI number that is unique to every (well behaved) ship. SAR images create small, unrecognizable blips that cannot be simply matched between SAR images or to other "active" data source.

**Undirected**

Furthermore, since the ship silhouette is sometimes just a blur - the direction and speed may be unavailable, and sometimes even a concrete size estimate is unavailable, so the fundamental blip is just a time and location report.

**Incomplete**

Sometimes "active" transmissions (AIS/VMS) are lost. A ship with a lack of a report cannot automatically be assumed to not be there. The same problem exists with SAR images - sometimes a blip is just "missed" in the picture.

**Incorrect**

While the AIS transmissions are digitally encoded and error-corrected - the SAR sensor is analog and susceptible to physical phenomena: AIS reports cannot appear from nowhere, and errors in the details can be corrected; SAR blips can just appear from nowhere, large ships can "accidently" have a small radar footprint.

**Inconsistent**

When dealing with Coastal AIS (or VMS) the consistency of reports may be counted on - AIS type1 messages must be transmitted every 3-5 seconds, and if a coastal receiver has intercepted the message before - it will most probably intercept the next one, too (assuming the ship has not exited its detection range).

Satellite sensors are different, in that they are not geo-stationary over the AOI, and revisit a specific location every X times a day (AIS satellite have a larger footprint, so they have a shorted mean revisit time than SAR satellites). The reports that are received, therefore, even from what should have been a consistent sensor (satellite AIS) are only "bursts" of reports, with an interval of anywhere between 45 minutes and 2-4 hours.

**Solution**

It should be understood that since the SAR image data used by the automatic algorithms, in embodiments of the present invention, have already passed human vetting - it can be regarded in a very high level of trust.

The fusion process for Passive-Passive takes place using the following parts:

**Candidates Finding**

When new, "passive" or unidentifiable blips arrive - the system needs to suggest only a subset of the existing (tracked/monitored) ships to be fused, otherwise the performance would be inefficient.

The new blips may be applicable to a lot of existing ships, but assigning an AIS reading from the Mediterranean Sea to a "large unknown target" last spotted a day before near Alaska not only doesn't make sense - it could create an exponentially long processing time, since it "may" be applicable to too many targets, and to just as many previously non-existent targets. The candidates' finder loads all the ships from the relevant database by the following query:

1. Take all the newly arrived blips, find a bounding geographic rectangle, and increase the size by more than the allowed match distance (2 degrees in every direction).
AND

2. Take all the newly arrived blips; create a bounding time-span that contains all the blips, increase the size by more than the allowed match temporal distance (8 hours in both directions).

This query returns all the ships with blips that could possibly, geographically, be from the same ship. This is not the main fusion logic, just the first filter.

**Rule Rankings**

A fusion rule is a simple function that takes a blip-to-ship tuple and returns a fusion result (Fuse/No Fuse flag and Certainty level). Every rule checks a different aspect of the potential matching and returns the result; rules are not co-dependent, and only the summary of all the rule results decides the final resolution.
The rules can take into account one or more of the following:

1. For blips without kinematics - if the sizes of both blips differ by more than 30% return a high "don't match" result.
2. For blips without kinematics - check the geographical distance and temporal distance, and if both are within the matching thresholds (no more than 90 minutes, no more than 30NM, allowing a max speed of 20Kn) return a score which is the square of the speed difference between the default speed for a vessel of the located size and the derived speed from the distance of the two blips.
3.

$$Rank = MaxRank - \frac{(ActualSpeed - DefaultSpeed)^2}{18}$$

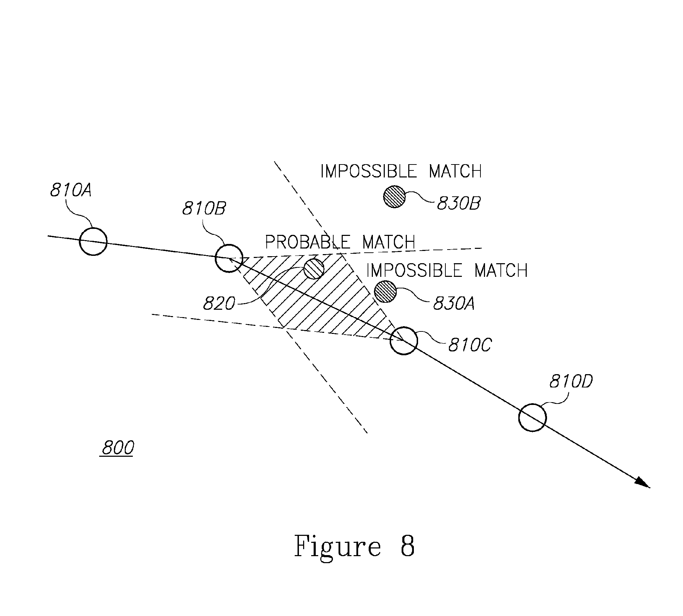

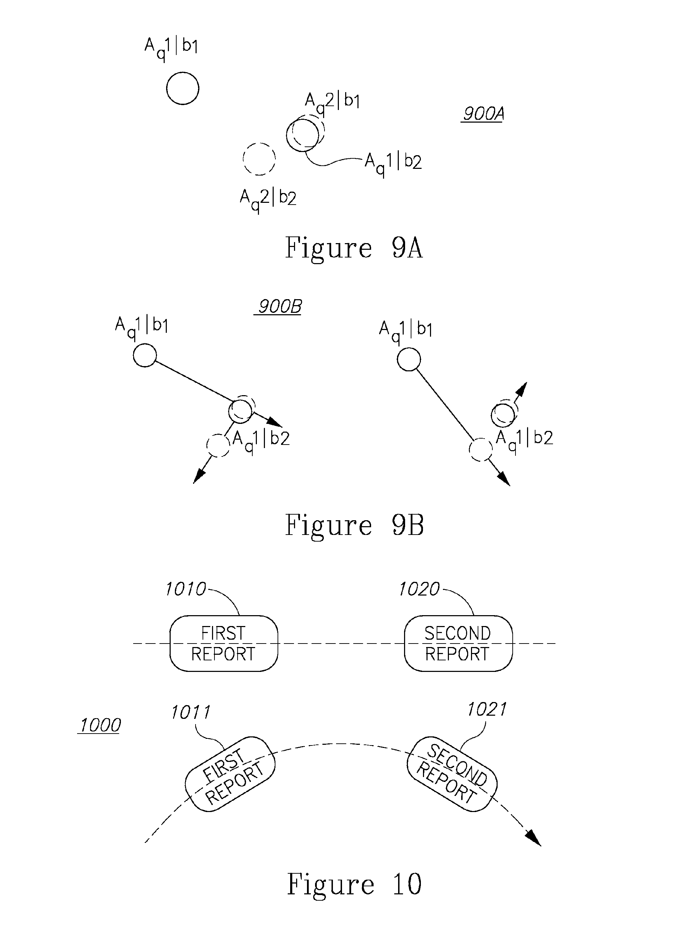

For example - an 80m and a 90m blip, 11NM apart, 45 minutes apart define a speed of 14.6Kn, and for an 85m vessel the default speed is 12Kn, so the square of the difference is 7.1, divided by 18 is 0.395, which results in a fusion rank of 8.105.
4. For fusion of blips at the edge of a ship (i.e. fusing a blip which happens after the last blip already in the ship, or before the first) - use the path prediction for the ship, and match with a lower level of certainty. **Figure 7** shows the path prediction of a ship created from two blips **(710** and **720),** and shows the viable areas for matching blips at different times. For example, if a blip arrives at 11:00 - if will be matched only if it is located in the viable area around prediction **730,** but if a blip arrived at 12:00 - it will be matched in the larger area, surrounding **740.**
5. For fusion of blip in the middle of a ship's path (i.e. a blip that happened between the times of two blips already in the ship) use probability cones from the two adjacent blips, and if the potential blip falls within both cones - allow a match. See **Figure 8** showing several blips **810A-810D** where a possible inter-blips match **820** can be differentiated from impossible matches **830A** and **830B,** since **820** falls inside both prediction cones (of the blip before, **810B** and the blip after, **810C).**
6. For passive blips - always allow for a 200m location error (due to image anchoring or satellite position report error).
7. Small blips (<60m) far from shore (>30nm) do not stay in one place. For example, in **Figure 9A,** diagram **900A** shows blips from the first acquisition are in solid lines and the dashed lines are from the second. All blips are "small" ones. A match **900B** in **Figure 9B** should be created between Aq1/b1 and Aq2/b1 and also Aq1/b2 and Aq2/b2 ( **Figure 9B ,** left diagram), and not the other way around **(Figure 9B,** right diagram), because the second option (right diagram) creates an unlikely scenario that a single small ship is almost stationary in the middle of the sea. Ships inside a "Port" area are expected to maneuver at slower velocities or be stationary, and the lowest distance match will get a high ranking (ignoring the ship's default speed).

**Rule Engine**

After running all the rules on all the tuples, each tuple has a "top score" from the highest certainty rule. The tuples are then ordered from the highest certainty to the lowest, and all the tuples that can have no effect on other tuple results are then fused (the blip is added to the ship).
Fusion of one ship-to-blip pair can have an effect on other pairs' fusion scores when it updates either the ship or blip in question (if a ship now has one more blip - the other blips can have a different matching score; if a blip is fused to one ship - it definitely can't be used for a different ship, so the fusion score is also effected).
Once an effected pair is located - another rule evaluation takes place only for the effected pairs, and the fusion process continues.

When all the blips were matched or if all remaining rules results aren't above the matching threshold - a fallback ship is created for the blip, so that no blip will go unfused.

### Active-Passive Matching

After fusing all the Active blips to one another, and then all the Passive blips to one another, we are still left with the complicated task of actually deciding that a certain Passive blip actually belongs to another Active blip. Wrong fusion will necessarily mean wrong identification of ships and hence- wrong decisions.

Active-Passive for satellite based maritime intelligence is that much more difficult than collection of maritime intelligence from "regular", continuous sensors as a result of lack of coordination between satellite passages:

Once one has matched between all the active blips, and all the passive blips - the remainder of the matching should be quite simple. Nevertheless, in reality the blips from the different sensors actually arrive at totally different times, so that simple geo-superposition simply does not suffice.

The present invention bridges this gap by applying the following:

1. Comparison of SAR originated ship size (as derived and ratified from the passive-passive matching) to the reported ship size (from the active-active matching)

2. Applying adapted path prediction algorithms - taking into account default and maximum speed for each of the aforementioned ship sizes. These adapted path prediction algorithms allow better correlation between passive and active blips.

3. Calculating the maximum speeds (according to private and public databases) of each of the active blips, and checking how much candidates for the fusion are there theoretically.

4. Deriving uncertainty areas as a result of silhouette calculation( from the SAR Processing Module) and cross correlating them with possible and actual sailing routes of the active/active blips.

5. Applying maximum and probable ship behavior calculations between each passive and active blip. Thus, a 200 meter active merchant ship will be less probable to be fused with a 200 meter passive blip if it required the first to perform sharp maneuvers using a speed of 25knots. This way, although the theoretical solution might be unsolvable, the practical one is more than viable.

6. In addition, the current invention is unique by the simple fact that it was designed to monitor a large area (e.g. the whole of the exclusive economic zone of a country) through time. This allows the system to correlate between active transmissions that were made before entering the predetermined area to passive contacts within the area. Therefore, it is able to identify ships that were actually not transmitting anything during the last few days- on the basis of complicated path prediction and a historic transmission.

At the end of this fusion process, the number of "ship" entities in the system should be aligned with the actual number of ships in reality.

### Path Prediction

After the system has all the blips of a given ship fused - a path prediction can be made.

As mentioned before - the main problem is not to predict where a big, 300m+ merchant ship, traveling at the optimal speed in the exact direction of its reported port for the last 2 days (in order to conserve fuel and arrive at the destination port at the exact allocated time window), is going to be after 50 minutes. The main problem is a ship with no voluntary reports, or one that has turned off its AIS (or VMS) and has been known to fish for Tuna in the last 3 months. Illegal fishermen have an erratic behavior, limited by the basic maritime-physical laws and their captains' paranoia level.

### Base Prediction Types

Again, there are several types of base prediction, derived from the source of the blips:

### Active-Active

If more than one active blips were received and fused, a prediction can be made with a high degree of certainty, and would even contain an internal correction mechanism.

At the very basic level - the simplest prediction is that between two reports, if that is indeed the same ship, the ship travels at a constant speed at a straight line. If a prediction is to be made about the position after the last received report - than the prediction is the speed and heading of the last report (or the deduced speed and heading from the last two reports) for time frame suitable for the reports received (if the last blip is and AIS report then it may be predicted a longer time period than a SAR report).

The internal correction mechanism is the speed and course report itself - if the ship reported a speed of 20kn at both reports, and the speed calculation between those points was 25kn - that the ship's predicted speed after the last report (and before the first) will be of 25kn, and not as it has reported.

**Active**

If only one active blip was received - a simpler, yet potentially less dependable, is to take the one AIS report with speed and heading report, and just "trusting it", without allowing external data to affect the prediction.

**Passive-Passive**

Similarly to the Active-Active approach - a passive-only solution for prediction contains a more dependable prediction (unlike the "Active" one), but only if the fusion certainty is high. If it is not - the path prediction certainty level is limited by the fusion prediction certainty level.

The added bonus of the "Passive-Passive" approach is the ability to deduce non-trivial courses, like ships not traveling in a straight line, but turning. Also, it is done without trusting the report of the ship, but based on the silhouette, wake, and extracted heading. This is illustrated in **Figure 10** where diagram **1000** shows two vessels, one on a trivial route **1010** going to **1020** and another ship turning, going from **1011** to **1021.**

**Passive**

When only one passive report is available, it is possible to use the kinematic data extracted from the image, and use it like in the Active prediction, only with a lower level of certainty. Also, another possible path prediction is provided in the exact opposite direction of the extracted heading (with a lower certainty level), to accommodate for ships with the bridge at the bow of the ship (as it is normally assume it is at the stern, and make the heading estimation based on that).

**Continuous Passive Tracking**

When it is possible to acquire three images from the same area, and create fused ships from three (or more) blips - the ability to predict paths for un-cooperating ships increases dramatically. Three points can not only precisely define a course and heading (even for low-res images) - they can also describe behavior (past maneuverings, current rate of turn, speed changes, and other class-specific behaviors). Passive reports may be derived from SAR satellites, optical satellites or other active sensors (e.g. a sighting by a fisherman at sea, a radar contact by a maritime asset patrolling the arena).

**Uncertainty Area**

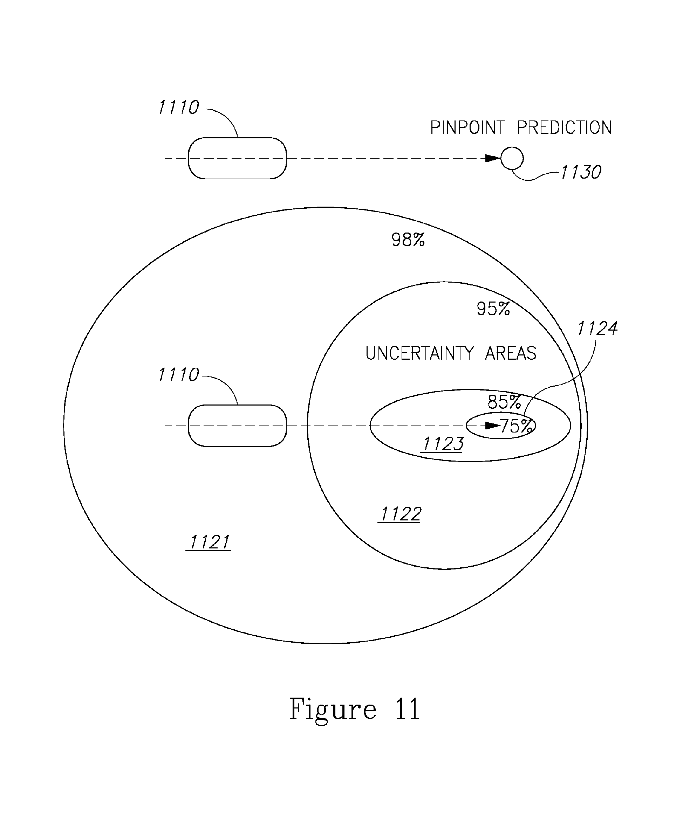

The predicted course, combined with the certainty level basically defines an area of probable location, rather than a specific pinpoint. This is illustrated in **Figure 11** showing in a route of ship **1110** derives a pinpoint prediction **at1130.** An analysis based on a probabilistic approach revels that the ship **1110** may be located in area **1121** at a probability of 98%, in area **1122** at a probability of 95%, in area **1123** at a probability of 85% and in area **1124** at a probability of 75%.

Having a more detailed level of prediction allows a more complex risk analysis and improves further fusion operation. Thus, the rule engine is actually using fusion inputs which are actually probabilities of presence in various areas, rather than just definitive locations. This allows a better fusion and prediction of less-predictable vessels.

**Full Prediction**

From the base level of prediction, the more advanced dimensions come into play.

When calculating the expected prediction points and probabilities the following items are taken into account:

  1. Reported/deduced speed and heading (from the base prediction)
  2. Max/Average speed based on size of vessel
  3. Max/Average speed based on vessel class (reported or extracted from silhouette)
  4. Actual meteorological data
  5. Predicted meteorological data (at the time the ship planned its voyage)

6. Coastlines, territorial waters

7. (Reported) Destination Port

8. Known (historic) behavior

9. Adjacent vessels

10. Time of day (related to visibility, fishing conditions)

11. Time of year (fishing conditions, expected weather)

12. Adjacent fishing zones

13. Origin of existing reports

14. Sailing/merchant lanes

15. Recent pirate activity

16. Total time at sea

17. Typical behavior for the specific area of interest.

**Learning**

Similarly to other fields, the sea is not a homogenous environment; Different areas may be characterized with different ship behavior. Some examples include:

• The different flora and fauna on Earth, require different fishing methods. For instance- tuna fishing is done using different methods than crab fishing. This inflicts directly on the type and behavior of fishing vessels at different areas.
• Merchant lanes are not clearly regulated such as aerial flight lanes.
• Dispersion of ports is different in every area.
• Ship building techniques are different.

This inherently means that data fusion, path prediction and behavior analysis must have adaptable parameters that will meet every area's specific characteristics (in addition to the generic rule engine).

As the system operates in a predetermined area of interest, it accumulates data on normative ship behavior, including - merchant lanes, merchant ship movement, fishing methods etc.

This affects the automatic algorithms not just as parameters which are taken into account during the prediction process- but as "living" parameters that allow minimum false negative/false positive reports.

**Possible Implementation**

After assuming the fused blips are really the positions (and times) of a given ship (and if they're not - they should have either been omitted before or corrected) a more fine-grained prediction than a simple straight line, may be made, by "weaving" expected location predictions into the existing reports, and is capable of up to 4 hours of prediction (for the simple cases), and sometimes no more than 2 hours for the more difficult cases.

**Risk Analysis**

Based on a ship with fused reports and predicted path, a bottom line assessment of the risk level of a ship may be gained - "is it a good guy or a bad guy"?

The main difference between other existing anomaly detection algorithms and this system is the addition of multiple sensor passive data (SAR and optical imagery) and the mistrust of active reports (falsified AIS/VMS/LRIT data).

The present system differentiates between risks and anomalies derived from active reports and ones derived from passive sources.

**Passive Risks**

The very reason that active transmissions are, in fact, active, means that their absence could be a risk in its own merit. Few examples of passive risks are as following:

1. When a large (e.g. >45m) SAR blip is discovered and has no active AIS transmission (unless docked in a port) - a risk is raised (since AIS transmission is required by any ship heavier than 300 gross tons).

2. When a slow (<4Kn) ship is discovered in the middle of the sea with no AIS (or any other reason to be there) - a risk is raised.

3. When a ship has reported AIS blips for a while and then stopped transmitting AIS (i.e. more AIS reports have come from that area but no more from that ship), and then a SAR blip has arrived which means the ship has continued to move - a risk is raised ("that ship doesn't want to be tracked"). A risk level is granted if the ship breaks course after shutting down the AIS transmitter.

4. When a ship reported a specific class or size, but (given that the fusion was correct) the actual size or silhouette does not match the reports - a risk is raised.

5. When a ship was discovered in a no-sailing area.

6. When a ship with active reports rendezvous with a ship with only passive reports, and vice versa (passive reports rendezvous with active reports).

**Active Risks**

Some anomalies are locatable by active reports only (or that passive reports give no added value). For example:

1. Ships in fishing zones
2. Ship travelling not in a standard route
3. Ships sailing in formation
4. Class -behavior mismatch

   ○ Ship reporting as cargo class but changing direction twice or more in 3 hours.
   ○ Ship reporting as non-fishing but sailing slowly in a fishing area (whereas a fast-sailing ship will not be flagged as risky, since its behavior is consistent with the report).

5. Behavior - area mismatch
6. Ship that's actively fishing and does not transmit VMS
7. Ships with history of wrongdoings
8. Ships sailing in areas that are known as the bad part of town
9. Rule-based anomalies (operator-defined areas and sailing characteristics that should raise flags)

**Phase 4: Ship Verification**

When one satellite reports one "ship" (position, speed, etc.) - it is treated by the present system as one "fact". As described above, the system automatically verifies if the data is correct (phase 1 of the Data Processing Workflow), then extracts additional data (phase 2) and finally fuses all the "facts" into one "ship".

While every "fact" is verified in itself, Phase 4 of the Data Processing Workflow verifies this data *vis a vis* the other "facts" that were fused to it, and in comparison with the total characteristics of the fused ship.

Once the system constructs the entity of "ship" - it automatically checks each one of the aforementioned "facts" *vis a vis* the full "ship" entity. This automatic verification process enables much more complicated data verification, as it checks the data not only in present time, but also comparing to the same ship last reports.

Thus, the system is able to detect inconsistencies in ship reports that are not detectable otherwise. For example: If one ship reports via a cooperative system (VMS, AIS, LRIT) that it is sailing North, there is no way to verify the report within itself. Once the data has been fused to a specific ship, the system is able to create the ship route (out of all the ship reports= "blips") and conclude that the report it sends of it "sailing North" is wrong.

This automatic, post fusion, verification process, enables the present system to detect in near real time changes in ship parameters which might provide further insight to the end client. Changes in ship type, cargo, destination or other details are correlated, detected and provide further insight to the client.

**Phase 5: Insight Deduction**

Once the "real world" picture has been comprised, each ship in the present system represents one ship in the real world. Although it is not trivial at all to fuse satellite data into real world maritime image, the present system takes the process one step further. The end result is pinpointing the "interesting" targets for the client, rather than providing him with 1000 vessels and letting him sift through them himself.

**Behavior Analysis**

The present system applies multi-faceted behavior analysis on all of the accumulated data base. These algorithms operated in several different areas, and apply different angles of behavior analysis on the picture. The following are some examples of behavior analysis algorithms applied on the present system:

1. **Non Cooperative Ships**: SAR satellites detect all vessels (the ones who transmit their position and the ones who do not). The fused maritime image indicates ships who did not transmit their position using the various positioning systems (AIS, VMS , LRIT). The present system does not treat all of these ships in the same way, and performs some further layers of analysis: One prominent example is marking ships that should have transmitted, but did not. International regulations determine procedures on ship position reports. Using satellite based size measurement and the aforementioned SAR mode, automatic algorithms check which ships should have transmitted but did not. These are marked as anomalies. It should be noted that this process is examined through time (using the fused picture) and not in a single point of time (the time of data acquisition).

2. **International Safety Regulations and Nautical Charts**: The maritime ecosystem acts according to SOLAS international regulations. These are concluded by a set of maritime rules and expressed using nautical charts. These nautical charts contain maritime data which is vital to the present maritime image analysis process. For instance, the present system may raise risk "grade" for ships which appear to be fishing in a "non fishing zone". Similarly, merchant ships that may choose a route of entrance to a port which does not correlate with the formal "recommended" route may also receive a higher "risk" grade.

3. **Fishery Analysis Algorithms:** Specifically, fishery vessels may be used as a platform for many illegal activities. Starting from illegal fishery, through Fishery Analysis Algorithms. Specifically, fishery vessels may be used as a platform for many illegal activities. Starting from illegal fishery, through piracy and illegal trafficking and ending in terrorist acts. Therefore, it is imperative to understand if a fishing vessel really is fishing or not. The present system has developed unique fishery analysis algorithms which locate fishing vessels and examine their maritime activity. The difficulty is multi-faceted:

a. **Classification:** Since SAR satellites are not able to differentiate between a 50 meter fishing vessel and a 50 meter merchant ship - the present algorithms apply behavior analysis and provide a classification to the ship.

b. **Behavior analysis**: Even once a ship has been classified as a fishing vessel; it is obvious that it's able to engage in other activities - such as drug smuggling or human trafficking. By characterizing different fishing methods, the present system is able to determine if a ship is probably currently engaged in fishing. These algorithms are specifically adapted to locating and pinpointing fishery vessel activities. Amongst others, the following parameters in applying fishery behavior analysis are used:

i. **Seasonal fishery zones**: Fishery zones change according to seasons. The present system is able to use fishery zone season in order to improve identification of fishing vessels.

ii. **Non fishing areas.**

iii. **Daily fishing areas**: Some in-situ data, such as the daily level of phytoplankton may indicate a larger concentration of fish. Ship fishing in these areas are more likely to be engaged in fishing.

4. **Use of meteorological data:** The seas, winds and currents influence greatly on the behavior of ships at sea. The present system receives data from multiple meteorological sensors and applies different risk analysis algorithms according to the sea state. For example - a fishing vessel across Africa is unlikely to be engaged in fishing in difficult meteorological vessels, and therefore it may be more suspicious then others.

5. **Merchant Fleet Data**: ISPS codes, SOLAS and AIS have greatly changed the amount and accuracy of available data regarding merchant fleets.

a. **Cross checking**: By cross checking the ship's behavior, ID and registered data with its actual transmissions - it is possible to detect anomalies in merchant (or merchant - alike) behavior. Prominent examples are ships travelling to different ports than they are actually reporting as port of destination, changes in ship type etc.

b. **Specific areas**: Specific areas at sea might require exclusively different behavior from merchant vessels than others. A good example of such is merchant ship behavior at the entrance to ports - which is very different from behavior at open sea. The present system reduces the false negative ratio by applying area specific behavior analysis algorithms.

c. **SOLAS regulations and safety regulations**: The behavior analysis algorithms of the present system also identify safety based maneuvers and mark them in order to prevent them from falsely raising ships' risk level.

The end result of this phase is the analyzed, real world picture, true for the predetermined time window of the monitoring.

**Integration of Open Source Intelligence**

The system uses Open Source Intelligence (Business open source intelligence- a form of intelligence collection management that involves finding, selecting, and acquiring information from publicly available sources and analyzing it to produce actionable intelligence) in order to extract and correlate further and deeper data regarding every vessel detected and identified. The following is implemented in two major forms:

1. Enhancement of risk analysis algorithms: In order to improve the system's ability to identify false reporting (e.g. wrong size, wrong ship type, false MMSI) the system automatically correlates all data gathered with multiple databases. In addition, data mining algorithms gather data from other OSINT sources (e.g. newspapars, fishery conferences, NGOs) regarding "blacklisted" vessels. This is inserted as a further parameter into the automatic behavior analysis algorithms.

2. Enhanced actionability: Once a ship has been positively identified, automated data mining algorithms extract as much data as possible required for actually enforcing the law and prosecuting the felony vessel. This include but is not limited to the ships' operator, insurer, owner, contact details etc.

**Phase 6: Reaction**

The system's end goal is to provide actionable maritime insight.

As such, after mission planning, data fusion and insight deduction -the system is able to provide an actionable recommendation regarding actual interception at sea of the felony vessel. As clarified above- this requires unique path prediction (that is based on satellite data).

Moreover, the system is able to calculate and recommend the most probable interception course of the felony target. This is differentiated into interception by aerial and/or maritime assets (which differ greatly in speed, sensors etc.). This will take into account the closest "friendly" asset and various other parameters (available fuel, future position and course of the felony vessel).

A typical timeline for system operation will look as follows:

1. 0300UTC- First SAR acquisition
2. 0330UTC- Second SAR acquisition
3. 0400UTC-Third SAR acquisition
4. 0430UTC- data processed, delivered to maritime assets, initial interception started
5. 0600UTC- Optical satellite acquires multiple images in "mosaic" mode
6. 0700UTC- positive identification of the felony vessel is provided, interception course is optimized
7. 0800UTC- Ship intercepted.

**Phase 7: Fused Traffic Analysis**

Because of the aforementioned challenges (difficulty in monitoring deep sea areas), it is quite difficult characterizing maritime traffic analysis trends. It is currently almost impossible comprising the full maritime intelligence picture in one single point in time, let alone through a long period.

Phase 7 material result is the analyzed real world picture at the predetermined time window. The fused traffic analysis report is comprised of N fused, real world maritime images.

The Fused Traffic Analysis picture contains multiple data regarding the maritime movement in the area of interest. It should be noted that this data also includes an analysis over time of all non-cooperative ship behavior, and is wider than the traffic analysis available only using cooperative AIS transmissions.

Furthermore, the Fused Traffic Analysis report refers to a large area of interest, which might be comprised of several smaller areas of interest (that were used for each Fused Picture). Thus, the Fused Traffic Analysis Report refers to a vast area, which might reach the full EEZ of a country.

Specifically, a report is generated and will include a textual and graphical analysis throughout the monitoring period of a variety of parameters.

Basic parameters might include:

1. Detected oil spills, size of area contaminated.
2. Specific ships which dropped oil spills.
3. Illegal fishing activity in the area of interest (with and without AIS)
4. Number of suspicious vessels detected in the area of interest
5. Merchant movement (density, routes).
6. Density of small vessel movement (less than 300 tons)
7. Vessel density around national strategic facilities
8. Foreign military vessel movement

9. Number of ships larger than 300 tons which do not transmit their position using AIS while in the area of interest.

10. Possible illegal trafficking routes

11. The Fused Traffic Analysis Picture will enable clients to better plan and operate their routine monitoring plans and enforcement operations.

**Delivery**

The present system is designed to provide the client the "end results". The full, analyzed, real world picture, together with conclusions regarding which ships have been identified as suspicious.

The system is based on web technologies and does not require any deployment at the client's end.

The client may receive a dynamic, real world picture which enables it to see and understand the maritime image at any point of time (both in the past and in the future).

The interactive client web interface exposes the reasons for the different risk levels (for any ship that has received such risk).

Furthermore, the system enables the client to export the data to existing systems and is de-facto the gateway to all maritime satellite data.

In addition, when referring to the Fused Traffic Analysis Report, the system will enable the client to expose all the different data described in phase 6 of the data processing (above).

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Program code embodied on a computer readable medium may be transmitted using any appropriate medium, including but not limited to wireless, wire-line, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The aforementioned flowchart and diagrams illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the invention has been shown and described with respect to particular embodiments, it is not thus limited. Numerous modifications, changes and improvements within the scope of the invention will occur to the person skilled in the art.

**Claims**

1. A method of providing a comprehensive near real-time maritime intelligence, within a predetermined area of interest, based at least partially on satellite imagery, said method comprising:

    applying an operational analysis and a multi-sensor mission planning, to generate a coverage plan required for satellite coverage;
    receiving a plurality of acquired data from multiple sensors located on satellites and sensors located terrestrially, based on the coverage plan, wherein the acquired data is non-continuous over time;
    applying data verification, data extraction, data fusion and insight deduction on said received data, to produce near real-time data on specified maritime vessels, within said predetermined area of interest;
    producing a fused traffic analysis report comprising N fused, real world maritime images, **characterised in that** the data verification, data extraction, data fusion and the insight deduction compensate for time gaps low image quality due to the non-continuous nature of the satellite imagery.

2. The method of claim 1, wherein the acquired data comprise data from any of the following sources: earth observation satellites such as: synthetic aperture radar (SAR), automatic identification system (AIS) and optical satellites, vessel monitoring system transponders (VMS), reflective satellites, terrestrial AIS, and meteorological sensors.

3. The method of claim 1 or claim 2, further comprising transferring the reports and the processed real world images in the form of actionable intelligence to assets for a practical reaction.

4. The method of claim 1, wherein the operational analysis involves the analysis of the availability of said data sources and constructing a daily monitoring plan.

5. The method of claim 4, wherein the daily monitoring plan includes the tasking of contiguous scans of the satellite orbits.

6. The method of claim 4, wherein the monitoring plan includes a satellite monitoring plan using multiple scanning modes, resolutions, angles of SAR images, SAR to SAR correlation or passive-passive matching.

7. The method of any of claims 2 to 6, wherein the SAR data is comprised of multiple resolutions and scanning modes, including HH/HV polarizations, dual or quad polarization images.

8. The method of any preceding claims wherein the data fusion step utilizes data fusion algorithms, path prediction algorithms and risk analysis algorithms that have been modified for satellite based sensors.

9. The method of any of claims 2 to 8, wherein the SAR images are processed using a SAR processing module that assesses location and at least one of: heading, direction, and speed of a vessel on the SAR image, responsive to an input from a human applied via graphical user interface.

**10.** The method of any preceding claim wherein the data verification comprises applying SAR based prediction for the location of a vessel followed by an optical image of the predicted location for data validation.

**11.** The method of any preceding claims wherein the satellite imagery includes optical imagery and wherein in the data verification: (i) all known and identified vessels are sorted out, (ii) contacts from the optical imagery are correlated to identified vessels, (iii) the number of unidentified optical contacts are deduced, and (iv) a cross correlation between unidentified optical contacts to all ships which were predicted to be present in the area is applied.

**12.** The method of any preceding claim wherein the processed real world image is delivered to maritime, terrestrial, or aerial assets for further reactions by the assets, based on the data delivered to the assets.

**13.** The method of any preceding claim wherein open source intelligence sources are further used in the data verification and also in transferring the processed real world image into an actionable report.

**14.** A system for providing a comprehensive near real-time maritime intelligence, within a predetermined area of interest, based at least partially on satellite imagery, said method comprising:

a multi source data fusion module configure to:

(i) receive a plurality of acquired data from multiple sensors located on satellites and sensors located terrestrially wherein the acquired data in non-continuous over time;
(ii) apply data verification, data extraction, and data fusion to said received data to produce near real-time data on specified maritime vessels, within said predetermined area of interest; and

a verification and insight deduction module configured to apply further verification and insight deduction, to produce a fused traffic analysis report which is comprised of N fused, real world maritime images **characterised in that** the data verification, data extraction, data fusion, and the insight deduction compensate for time gaps and low image quality due to the non-continuous nature of the satellite imagery.

**15.** A computer program product for providing a comprehensive near real-time maritime intelligence, within a predetermined area of interest, based at least partially on satellite imagery, said computer program product comprising:

a tangible computer readable storage medium having computer readable program embodied therewith, the computer readable program comprising:

computer readable program configured to receive a plurality of acquired data from multiple sensors located on satellites and sensors located terrestrially wherein the acquired data in non-continuous over time;
computer readable program configured to apply data verification, data extraction, data fusion and insight deduction on said received data to produce near real-time data on specified maritime vessels, within said predetermined area of interest; and
computer readable program configured to produce a fused traffic analysis report which is comprised of N fused, real world maritime images **characterised in that** the data verification, data extraction, data fusion and insight deduction compensate for time gaps and low image quality due to the non-continuous nature of the satellite imagery.

Figure 1

Figure 2A

200

| 210 | APPLYING OPERATIONAL ANALYSIS AND MISSION PLANNING |

| 220 | RECEIVING A PLURALITY OF ACQUIRED DATA FROM MULTIPLE SENSORS LOCATED ON SATELLITES AND SENSORS LOCATED TERRESTRIALLY |

| 230 | APPLYING DATA VERIFICATION, DATA EXTRACTION, DATA FUSION AND INSIGHT DEDUCTION ON SAID RECEIVED DATA TO PRODUCE NEAR REAL TIME DATA ON ALL MARITIME VESSELS, WITHIN SAID PREDETERMINED AREA OF INTEREST |

| 240 | PRODUCING A FUSED TRAFFIC ANALYSIS REPORT WHICH IS COMPRISED OF N FUSED, REAL WORLD MARITIME IMAGES |

| 250 | APPLAYING DATA PROCESSING AND DELIVERING OF THE NEAR REAL TIME MARITIME INTELLIGENCE |

| 260 | TRANSFERRING TO MARITIME, TERRESTRIAL OR AERIAL ASSETS |

Figure 2B

Figure 3

ADVANCED SAR PROCESSING
HEADING [11____] ☑ USE
SIZE [415.7523] ☑ USE
SPEED [_____] ☐ USE
LOCATION [141°30']
[66.066]

[CERTAINTY] [APPROVE]
[DELETE] [CANCEL]

Figure 4

Figure 5A

510B

520B

530B

540B

550B

| TAKE OPTICAL IMAGERY | SORT OUT FROM THE CURRENT MARITIME PICTURE ALL THE KNOWN AND IDENTIFIED VESSELS | CORRELATE CONTACTS FROM THE OPTICAL IMAGERY TO IDENTIFIED VESSELS | DEDUCE NUMBER OF UNIDENTIFIED OPTICAL CONTACTS | CROSS CORRELATE BETWEEN UNIDENTIFIED OPTICAL CONTACTS TO ALL SHIPS (IMAGES) WHICH WERE PREDICTED TO BE PRESENT IN THE AREA |

Figure 5B

PRIMARY
PREDICTION

THIN AREA=BOW

620

600

610

THICK AREA= STERN

SECONDARY
PREDICTION

630

Figure 6

9:00

710

VIABLE AREA FOR
BLIPS FROM 11:00

10:00

720

740

PREDICTION
FOR 11:00

730

VIABLE AREA FOR
BLIPS FROM 12:00

700

PREDICTION
FOR 12:00

Figure 7

*810A*

*810B*

IMPOSSIBLE MATCH

*830B*

PROBABLE MATCH

IMPOSSIBLE MATCH

*820*

*830A*

*810C*

*810D*

*800*

Figure 8

$A_q1|b1$

$A_q2|b1$

$A_q1|b2$

$A_q2|b2$

_900A_

Figure 9A

_900B_

$A_q1|b1$

$A_q1|b2$

$A_q1|b1$

$A_q1|b2$

Figure 9B

1010

FIRST
REPORT

1020

SECOND
REPORT

_1000_

1011

FIRST
REPORT

1021

SECOND
REPORT

Figure 10

*1110*

PINPOINT PREDICTION

*1130*

98%

95%

*1124*

UNCERTAINTY AREAS

*1110*

85%

75%

*1123*

*1122*

*1121*

Figure 11

Europäisches
Patentamt

European
Patent Office

Office européen
des brevets

# EUROPEAN SEARCH REPORT

**Application Number**

EP 11 19 6123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | S A Horn ET AL: "Near Real-Time Multi-Sensor Fusion for Cued Reconnaissance", Technical Memorandum, 30 November 2010 (2010-11-30), XP55030294, Retrieved from the Internet: URL:http://www.dtic.mil/cgi-bin/GetTRDoc?AD=ADA535085 [retrieved on 2012-06-19] * page 1 - page 33 * ----- | 1-15 | INV. G01S13/72 G08G3/00 |
| Y | GREIDANUS H ED - BARALE V ET AL: "Remote Sensing of the European Seas, Satellite Imaging for Maritime Surveillance of the European Seas", 31 March 2008 (2008-03-31), REMOTE SENSING OF THE EUROPEAN SEAS, SPRINGER SCIENCE+BUSINESS MEDIA B.V, DORDRECHT, NL, PAGE(S) 343 - 358, XP002514546, ISBN: 978-1-4020-6772-3 [retrieved on 2008-03-15] * sec. 3 * ----- | 1-15 | |
| Y | H Maass ET AL: "Maritime Application - Ship Detection Service", 8th IAA Symposium on Small Satellites for Earth Observation, 8 April 2011 (2011-04-08), XP55030413, Retrieved from the Internet: URL:http://media.dlr.de:8080/erez4/erez?cmd=get&src=os/IAA/archiv8/Presentations/IAA-B8-1104-1.pdf [retrieved on 2012-06-19] * the whole document * ----- -/-- | 1-15 | TECHNICAL FIELDS SEARCHED (IPC) G01S G08G |

The present search report has been drawn up for all claims

| Place of search | Date of completion of the search | Examiner |
|---|---|---|
| Munich | 20 June 2012 | Rudolf, Hans |

EPO FORM 1503 03.82 (P04C01)

**EP 2 610 636 A1**

## EUROPEAN SEARCH REPORT

Application Number

EP 11 19 6123

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Guy Thomas: "Civilian Earth Observation Satellites for Global Maritime Awareness", Coast Guard Proceedings, 10 August 2010 (2010-08-10), pages 38-40, XP55030326, Retrieved from the Internet: URL:http://www.uscg.mil/proceedings/archive/2010/Vol67_No2_Sum2010.pdf [retrieved on 2012-06-19] * the whole document * | 1-15 | |
| A | SOPHIE RAMONGASSIE ET AL: "RADAR and AIS sensors constellation for global maritime surveillance", GEOSCIENCE AND REMOTE SENSING SYMPOSIUM (IGARSS), 2010 IEEE INTERNATIONAL, IEEE, PISCATAWAY, NJ, USA, 25 July 2010 (2010-07-25), pages 3793-3796, XP031812719, ISBN: 978-1-4244-9565-8 * sec. 1, 2figure 1 * | 1-15 | |
| A | YVONNE FISCHER ET AL: "Object-oriented sensor data fusion for wide maritime surveillance", WATERSIDE SECURITY CONFERENCE (WSS), 2010 INTERNATIONAL, IEEE, 3 November 2010 (2010-11-03), pages 1-6, XP031930680, DOI: 10.1109/WSSC.2010.5730244 ISBN: 978-1-4244-8894-0 * the whole document * | 1-15 | |
| A | WO 2011/138744 A2 (EADS SINGAPORE PTE LTD [SG]; BRETSCHNEIDER TIMO [SG]; LEE KEN-YOONG [S) 10 November 2011 (2011-11-10) * the whole document * | 1-15 | |

TECHNICAL FIELDS SEARCHED (IPC)

-/--

The present search report has been drawn up for all claims

| Place of search | Date of completion of the search | Examiner |
|---|---|---|
| Munich | 20 June 2012 | Rudolf, Hans |

EPO FORM 1503 03.82 (P04C01)

Europäisches
Patentamt

European
Patent Office

Office européen
des brevets

# EUROPEAN SEARCH REPORT

Application Number

EP 11 19 6123

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/271054 A1 (DOKKEN SVERRE THUNE [MC]) 29 October 2009 (2009-10-29) * the whole document * | 1-15 | |
| A | H Greidanus ET AL: "R&D in Support of EU Policies on Maritime Border Surveillance", European Maritime Day, 21 May 2011 (2011-05-21), XP55030350, Gijon Retrieved from the Internet: URL:https://webgate.ec.europa.eu/fpfis/iwt /system/files/Greidanus.pdf [retrieved on 2012-06-19] * page 3 - page 4 * | 1-15 | |
| A | Miguel Acitores: "R&D industry efforts towards enhanced EU maritime border security", , 21 May 2010 (2010-05-21), XP55030387, Gijon Retrieved from the Internet: URL:https://webgate.ec.europa.eu/maritimef orum/system/files/Acitores.pdf [retrieved on 2012-06-19] * the whole document * | 1-15 | |
| A | Salvatore Rampino: "SeaBILLA EU FP7 Integration Project on Sea Border Surveillance", European Maritime Day, 21 May 2010 (2010-05-21), XP55030388, Gijon Retrieved from the Internet: URL:https://webgate.ec.europa.eu/maritimef orum/system/files/Rampino.pdf [retrieved on 2012-06-19] * the whole document * | 1-15 | |

TECHNICAL FIELDS
SEARCHED      (IPC)

-/--

The present search report has been drawn up for all claims

| Place of search | Date of completion of the search | Examiner |
|---|---|---|
| Munich | 20 June 2012 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | Application Number<br>EP 11 19 6123 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Carlo Morucci: "Development of Pre-operational Services for Highly Innovative Maritime Surveillance Capabilities",<br>SeaTIMED / SPACEMAR 1st International Symposium,<br>27 November 2011 (2011-11-27), XP55030421, Toulon<br>Retrieved from the Internet:<br>URL:http://www.gmes-dolphin.eu/sites/gmes-dolphin.eu/files/Carlo Morucci (eGEOS) - Presentation to the SeaTiMed-SPACMAR 1st International Symposium (September 27th, 2011).pdf<br>[retrieved on 2012-06-20]<br>* the whole document *<br>----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 20 June 2012 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 11 19 6123

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2012

| Patent document cited in search report | | | Publication date | Patent family member(s) | | Publication date |
|---|---|---|---|---|---|---|
| WO 2011138744 | A2 | | 10-11-2011 | NONE | | |
| US 2009271054 | A1 | | 29-10-2009 | AT | 537529 T | 15-12-2011 |
| | | | | EP | 2070068 A2 | 17-06-2009 |
| | | | | GB | 2441802 A | 19-03-2008 |
| | | | | JP | 2010503908 A | 04-02-2010 |
| | | | | US | 2009271054 A1 | 29-10-2009 |
| | | | | WO | 2008031880 A2 | 20-03-2008 |

For more details about this annex : see Official Journal of the European Patent Office, No. 12/82